# EUROPEAN PATENT APPLICATION

(11) **EP 2 963 556 A1**
(43) Date of publication of application: **06.01.2016**
(21) Application number: 14757762.1
(22) Date of filing: 26.02.2014
(51) Int. Cl.: G06F 13/00, G06Q 50/10

(54) **INFORMATION PROCESSING DEVICE, INFORMATION PROCESSING METHOD AND RECORDING MEDIUM**

(30) Priority: 28.02.2013 JP 2013039613
(71) Applicant: NEC CORPORATION, Tokyo 108-8001 (JP)
(72) Inventor: KITATANI Kenichi, Tokyo 108-8001 (JP)
(74) Representative: Vossius & Partner Patentanwälte Rechtsanwälte mbB
(86) International application number: PCT/JP2014/054673
(87) International publication number: WO 2014/132999

(57) **Abstract**

An information processing device (10) stores: an association table in which users are associated with each other; and communication history information on communications with a terminal connected thereto via a communication network, and includes: a user identifier (601) that identifies a first user and a second user who satisfy a predetermine criterion, based on a communication history stored in a communication history information storage (500); a communicator (602) that sends to at least one of the first user and the second user a message presenting a process to be performed for registering these users in the association table; a determiner (603) that determines whether the first and second users have performed the presented process after the message was sent; and an association updater (604) that updates, when the process is determined to have been performed, the association table to associate the first user with the second user.

## Description

### Technical Field

The present disclosure relates to an information processing device, an information processing method, and a recording medium.

### Background Art

In many communication services (SNS [social networking services]) a user can register other users as the user's friends and make settings so as to make the user's personal information, posts, and the like accessible to only those users registered as the user's friends.

It often happens that a user, after registering a person as his/her friend, keeps on not removing the person from registered friends even when the user becomes estranged from the person. This is attributable to psychological resistance that many users have against removing a person from registered friends by themselves. Consequently, it often happens that estranged users remain in a user's friend list provided by communication services.

As a technique to handle such problem, Patent Literature 1 discloses a system for automatically delete an estranged user from a friend list. The system allows a user to disconnect a person estranged from the user through automatic processing, thereby relieving psychological resistance that the user experiences against removing a person from registered friends.

### Citation List

### Patent Literature

Patent Literature 1: Unexamined Japanese Patent Application Kokai Publication No. 2010-237970

### Summary of Invention

### Technical Problem

Situations where a user encounters psychological resistance in managing a friend list are not limited to removing a person from registered friends. For example, when he/she asks another user to register himself/herself as a friend, he/she may have psychological resistance worrying about feelings of the other user. Such psychological resistance has sometimes caused difficulties in applying for friend registration of a person who is indeed a good friend in real life, resulting in failure to reflect the actual personal relationships among users in a system.

The present disclosure has been designed against the background described above, with an objective of providing an information processing device, an information processing method, and a recording medium which make it easier to reflect the actual personal relationships among users in a system. Another objective of the present disclosure is facilitating what is called friend registration.

### Solution to Problem

To achieve the above-described objectives, an information processing device according to a first aspect of the present disclosure includes:
an association table storage that stores an association table associating users with each other;
a communication history information storage that stores a communication history with a terminal that is connected via a communication network;
a user identifier that identifies a first user and a second user who satisfy a predetermined criterion, based on the communication history stored in the communication history information storage;
a communicator that sends to at least either one of a terminal corresponding to the first user identified by the user identifier and a terminal corresponding to the second user identified by the user identifier a message that presents a process to be performed for registering the first and second users in the association table;
a determiner that determines, after the communicator sends the message, whether the first and second users have performed the process presented in the message; and
an association updater that updates, when the determiner determines that the process has been performed, the association table to associate the first user with the second user.

A method for processing information according to a second aspect of the present disclosure includes:
an identification step of identifying a first user and a second user who satisfy a predetermined criterion, based on a communication history between an information processing device and a terminal that are connected to each other via a communication network;
a sending step of sending to at least either one of a terminal corresponding to the first user identified in the identification step and a terminal corresponding to the second user identified in the identification step a message that presents a process to be performed for associating the first user with the second user;
a determination step of determining, after the message is sent in the sending step, whether the first and second users have performed the process presented in the message; and
an association step of associating the first user with the second user if the presented process is determined to have been performed in the determination step.

A non-transitory recording medium according to a third aspect of the present disclosure records a program causing a computer to execute:
an identification step of identifying a first user and a second user who satisfy a predetermined criterion, based on a communication history with a terminal that is connected via a communication network;
a sending step of sending to at least either one of a terminal corresponding to the first user identified in the identification step and a terminal corresponding to the second user identified in the identification step a message that presents a process to be performed for associating the first user with the second user;
a determination step of determining, after the message is sent in the sending step, whether the first and second users have performed the process presented in the message; and
an association step of associating the first user with the second user if the presented process is determined to have been performed in the determination step.

### Advantageous Effects of Invention

The present disclosure can make it easier to reflect actual personal relationships among users in a system. The present disclosure can also facilitate what is called friend registration.

### Brief Description of Drawings

FIG. 1 is a drawing showing that a server is connected to a plurality of information terminals via a communication network;
FIG. 2 is a drawing showing a configuration of a server according to Embodiment 1;
FIG. 3A is a drawing showing communication history information;
FIG. 3B is a drawing showing communication history information;
FIG. 4 is a drawing showing a user and information terminal table;
FIG. 5A is a drawing showing an association table;
FIG. 5B is a drawing showing an association table;
FIG. 6 is a sequence diagram according to Embodiment 1;
FIG. 7 is a flowchart of an association update process according to Embodiment 1;
FIG. 8 is a drawing showing a configuration of a server according to Embodiment 2;
FIG. 9 is a sequence diagram according to Embodiment 2;
FIG. 10 is a drawing showing a positional information table;
FIG. 11A is a drawing showing communication history information;
FIG. 11B is a drawing showing a reference history table; and
FIG. 12 is a drawing showing a configuration of a server according to Embodiment 3;

### Description of Embodiments

Embodiments of the present disclosure will now be described with reference to the drawings.

### (Embodiment 1)

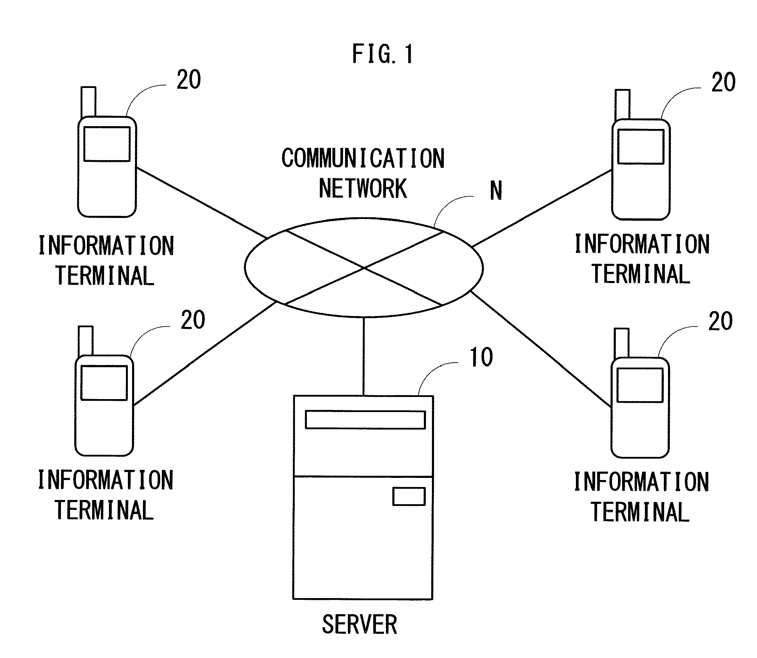

An information processing device according to the present embodiment is described below by using a server 10 illustrated in FIG. 1 as an example. The server 10 is connected to a plurality of information terminals 20 via a communication network N to provide community services such as SNS to the information terminals 20.

In general, to register friends between users (to associate users with each other as friends), a user A (an SNS user) needs to make a request to a user B (another SNS user) to register the user A as a friend and the user B needs to approve the request. The server 10 has an additional function to recommend both of the users who are determined to have had certain interaction with each other to exchange a message (communicate: mutually send and receive a message), and to associate the users with each other as friends when a message is exchanged in response to the recommendation. The following describes the configuration and functions of the server 10.

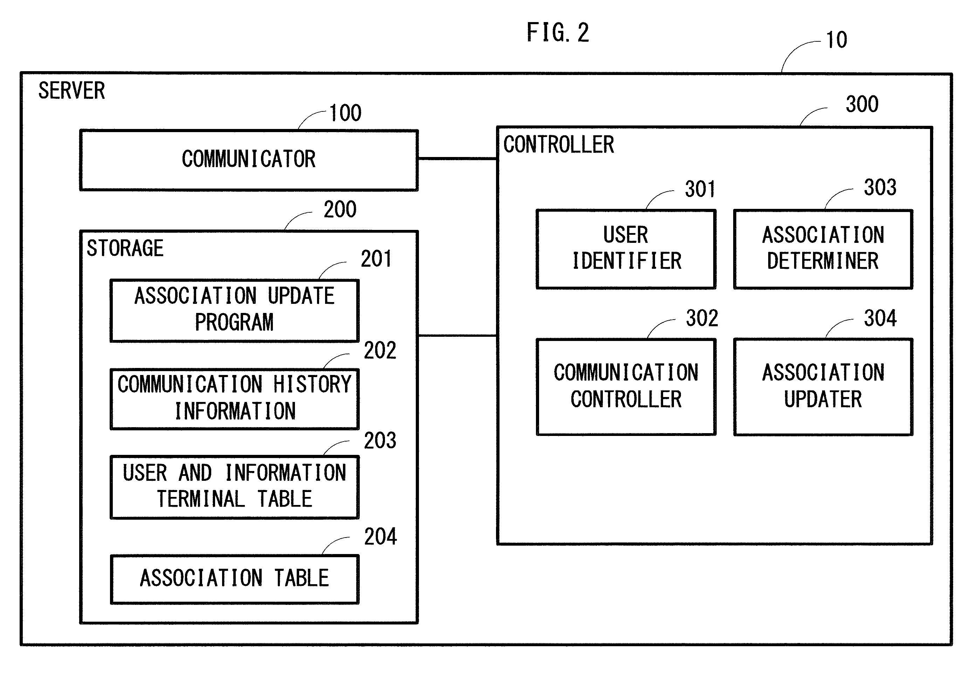

The server 10 includes a communicator 100, a storage 200, and a controller 300 as illustrated in FIG. 2.

The communicator 100, which includes a network card or the like, sends and receives information to and from the information terminals 20 connected to the communication network N.

The storage 200, which includes a storage device such as a flash memory or a hard disk, stores programs including an association update program 201 described below as well as storing the data necessary for executing the programs (for example, communication history information 202, a user and information terminal table 203, and an association table 204 as described below) and the like.

The association update program 201 is a program used for updating user associations without users' approvals.

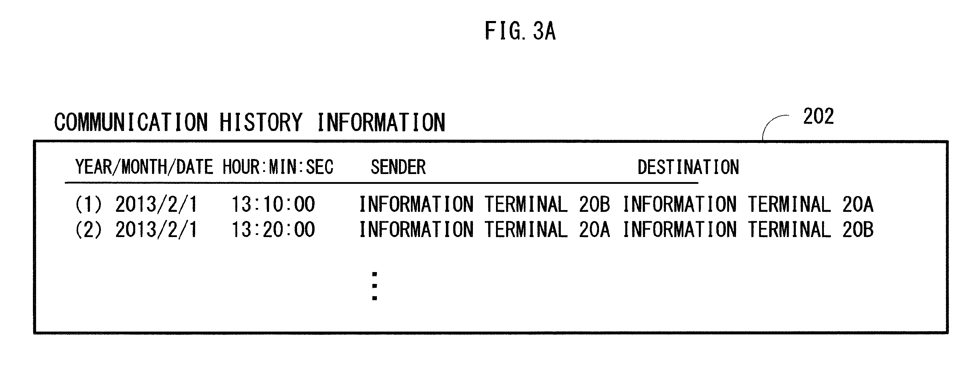

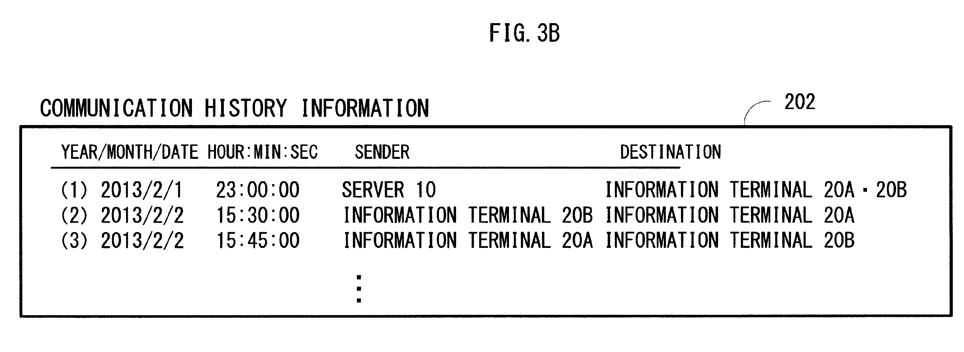

The communication history information 202, which shows a history of communications between the server 10 and each of the information terminals 20 as well as between the information terminals 20 via the server 10, contains information identifying the date and time of communication (transmission), sender, destination, and the like, as exemplified in FIGS. 3A and 3B.

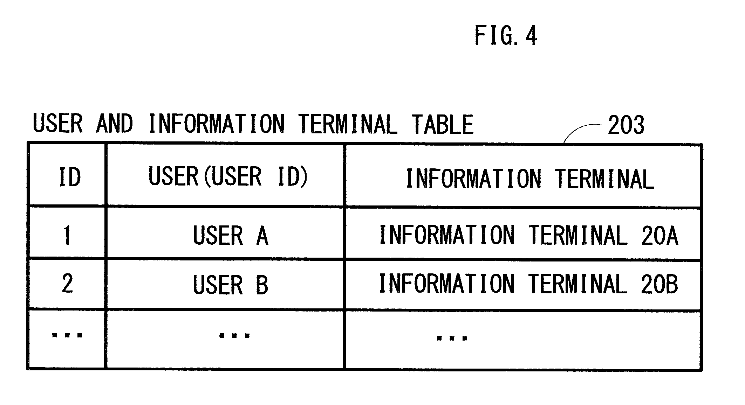

The user and information terminal table 203 records information that maps a user of the community service to an information terminal 20. As exemplified in FIG. 4, the user and information terminal table 203 maps a user ID (IDentification) of each user to an information terminal 20.

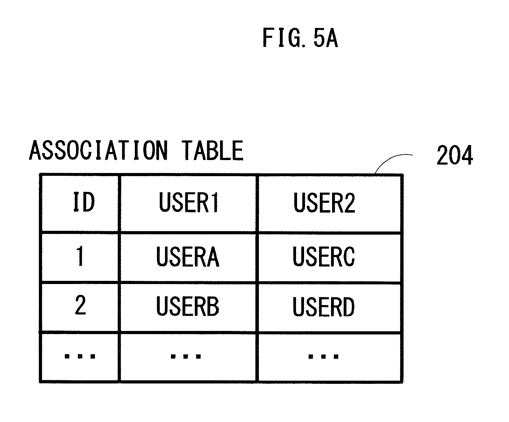

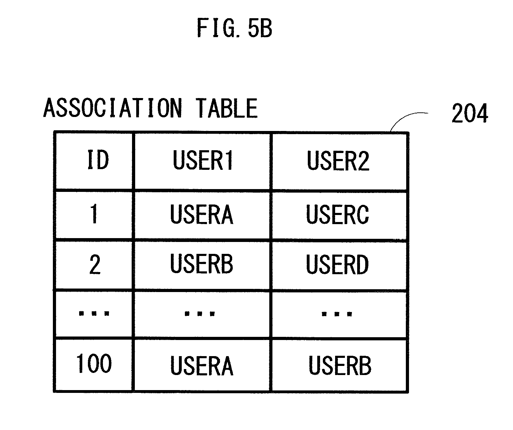

The association table 204 records information associating users with each other who are in a friend's relationship (for example, members of a family or circle) among the users of a community service provided by the server 10. As exemplified in FIGS. 5A and 5B, the association table 204 includes an ID column, a user 1 column, a user 2 column, and the like. The ID column contains an identifier for uniquely identifying a record included in the association table 204. The user 1 column contains information about one of the two users associated with each other. The user 2 column contains information about the other user, whose information is not contained in the user 1 column, of the two users associated with each other. In the present example, the user 1 and user 2 columns contain user IDs as information for indicating users. In the examples shown in FIGS. 5A and 5B, the record corresponding to ID = 1 associates the user A with the user C, while the record corresponding to ID = 2 associates the user B with the user D. Personal information can be mutually viewed between the users who are registered in the association table 204 as friends. When a record registered as friends is deleted from the association table 204, personal information can no longer be mutually viewed between the users who were registered as friends.

The controller 300 shown in FIG. 2, which includes a CPU (central processing unit), a ROM (read only memory) storing a basic operating program, and a RAM (random access memory) providing a work area, performs various processes according to programs stored in the storage 200 or the like. For example, the controller 300 performs an association update process described below according to the association update program 201. In addition, the controller 300 functions as a user identifier 301, a communication controller 302, an association determiner 303, and an association updater 304 by operating in accordance with the association update program 201.

The user identifier 301 identifies the users having exchanged a message with each other as candidates for an association (friends) based on the communication history stored in the communication history information 202 as exemplified in FIG. 3. For example, if any exchange of information between the users A and B is recorded in the communication history, the user identifier 301 identifies the users A and B as candidates for an association.

The communication controller 302 controls the communicator 100 to send an email (recommendation [mediation] email) that contains a message recommending to exchange information between the identified users to at least one of the information terminals 20 that correspond to the users identified by the user identifier 301.

The association determiner 303 determines whether the users identified by the user identifier 301 are already associated with each other in the association table 204 as exemplified in FIGS. 5A and 5B.

When the association determiner 303 determines that the users identified by the user identifier 301 are not associated with each other, the association updater 304 updates the association table 204 to associate the users identified by the user identifier 301 with each other.

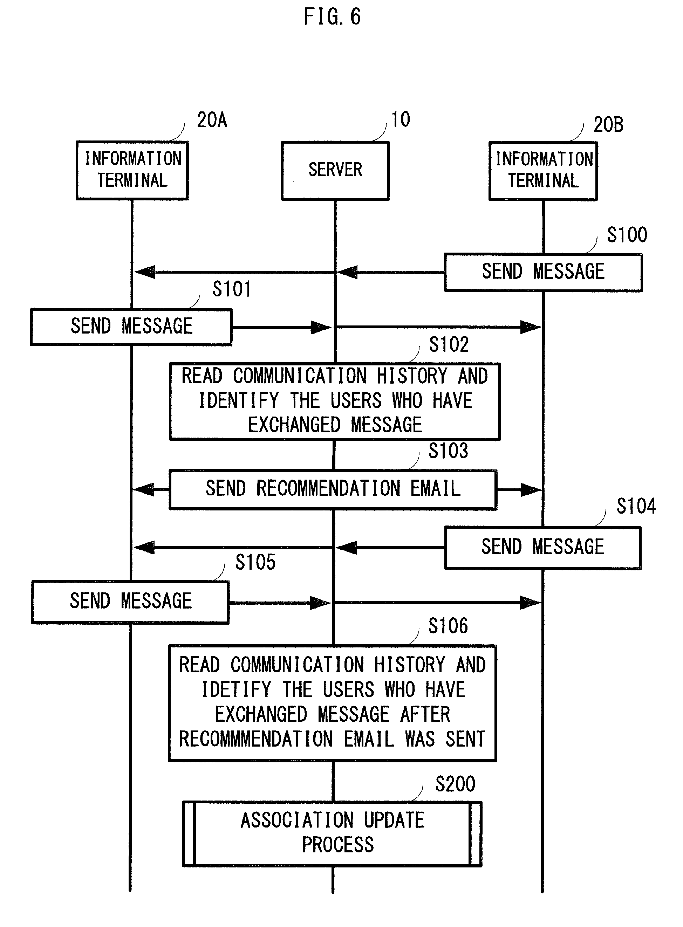

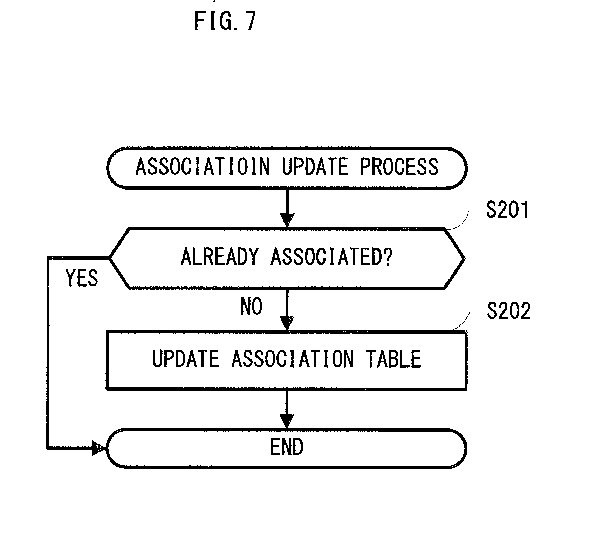

The following describes operations of the server 10 configured as above. The server 10 provides general communication services. The description below is given mainly about characteristic functions related to what is called friend registration, among various functions provided by the server 10, with reference to the sequence diagram in FIG. 6 and the flowchart in FIG. 7. For ease of understanding, the following description uses the information terminals 20A and 20B as examples, among a plurality of information terminals 20 connected to the communication network N.

Every time a communication is made via the server 10 (for example, sending and receiving a message between the information terminals 20A and 20B via the server 10, or sending an email from the server 10 to the information terminal 20A or 20B) the controller 300 in the server 10 records a history item of the communication into the communication history information 202.

As an example, an assumption is made here that the information terminal 20B sent a message to the information terminal 20A via the server 10 as illustrated in FIG. 6 (Step S100). The term "send a message" as used herein broadly includes sending an email, posting a comment on a blog being made public, posting a comment on a bulletin board system, and the like. When the message is sent, the server 10 (the controller 300 shown in FIG. 2) records into the communication history information 202, like (1) shown in FIG. 3A, information representing the date and time when the message was sent (communicated) (2013/2/1 13:10:00), the sender of the message (the information terminal 20B), and the destination of the message (the information terminal 20A).

Additionally, it is assumed that the information terminal 20A, which received the message from the information terminal 20B, has sent a message to the information terminal 20B via the server 10 as shown in FIG. 6 (Step S101). When the message is sent, the server 10 (the controller 300 shown in FIG. 2) records into the communication history information 202, like (2) shown in FIG. 3A, the date and time when the message was sent (2013/2/1 13:20:00), the sender of the message (the information terminal 20A), and the destination of the message (the information terminal 20B).

At some preset time when the load on the server lessens, the server 10 (the user identifier 301 shown in FIG. 2) reads the communication history information 202 where a communication history is recorded (note that it may be read not only at the preset time but also at any time), identifies the information terminals 20 that have exchanged a message based on the communication history, and references the user and information terminal table 203 to identify the users who exchanged the message (Step S102). For example, if the communication history items (1) and (2) shown in FIG. 3A are recorded in the communication history information 202, the server 10 determines that the information terminals 20A and 20B have exchanged a message with each other, and then references the user and information terminal table 203 shown in FIG. 4 to determine that the users A and B have exchanged the message with each other (note that it is assumed, as shown in FIG. 4, that the user A is mapped to the information terminal 20A in the record ID = 1, while the user B is mapped to the information terminal 20B in the record ID = 2 in the user and information terminal table 203).

Then, the server 10 (the communication controller 302 shown in FIG. 2) controls the communicator 100 to send a recommendation email recommending exchange of a message to the information terminals 20 of the identified pair of users (Step S103). For example, the server 10 sends a recommendation email containing a message saying "Say hello to the user B<?" to the information terminal 20A as well as sending a recommendation email containing a message saying "Say hello to the user A?" to the information terminal 20B. When these emails are sent, the server 10 (the controller 300 shown in FIG. 2) records into the communication history information 202, like (1) shown in FIG. 3B, the date and time when the message was sent (2013/2/1 23:00:00), the sender of the message (the server 10), and the destination of the message (the information terminals 20A and 20B).

It is assumed here that the information terminal 20B has sent a message (for example, an email containing greetings to the user A) to the information terminal 20A via the server 10 as illustrated in FIG. 6 (Step S104). When the message is sent, the server 10 (the controller 300 shown in FIG. 2) records into the communication history information 202, like (2) shown in FIG. 3B, the date and time when the message was sent (2013/2/2 15:30:00), the sender of the message (the information terminal 20B), and the destination of the message (the information terminal 20A).

It is also assumed that the information terminal 20A has sent a message (for example, an email replying to the email from the information terminal 20B containing greetings) to the information terminal 20B via the server 10 (Step S105). When the message is sent, the server 10 (the controller 300 shown in FIG. 2) records into the communication history information 202, like (3) shown in FIG. 3B, the date and time when the message was sent (2013/2/2 15:45:00), the sender of the message (the information terminal 20A), and the destination of the message (the information terminal 20B).

Next, the server 10 reads the communication history information 202 where a communication history is stored, and, based on the communication history, searches the pairs (of users) to whom recommendation emails were sent in Step S103 during a certain previous period (the past one month, for example) to identify every pair of users who have exchanged a message afterwards (Step S106). As an example, it is assumed here that the communication history item (1) shown in FIG. 3B is recorded in the communication history information 202. In this case, the server 10 first identifies the communication history item that contains the server 10 as the sender, and then, according to the communication history item, the server 10 determines that the date and time is "2013/2/1 23:00:00" and the destination is the information terminals 20A and 20B (that is, the server 10 identifies the date and time and the destination of the recommendation email).

It is also assumed that the communication history information 202 records history items respectively representing that the information terminal 20B sent information to the information terminal 20A at "2013/2/2 15:30:00" as indicated in (2) in FIG. 3B and that the information terminal 20A sent information to the information terminal 20B at "2013/2/2 15:45:00" as indicated in (3) in FIG. 3B. Then, the server 10 determines that information has been exchanged between the information terminals 20A and 20B since the date and time when the recommendation email was sent (2013/2/1 23:00:00). Next, the server 10 references the user and information terminal table 203 to find that the user A is mapped to the information terminal 20A and the user B is mapped to the information terminal 20B. In this way, the server 10 identifies the users A and B as a pair of users who have exchanged a message in response to a recommendation email that had been sent to them beforehand.

Next, the server 10 (the association determiner 303 shown in FIG. 2) performs an association update process (Step S200).

As shown in FIG. 7, when the association update process is started, the association determiner 303 determines whether the pair of users identified in Step S106 are already associated with each other in the association table 204 (Step S201).

When the pair of users identified in Step S106 are found not to be associated with each other (Step S201; No), the association updater 304 updates the association table 204 to register the pair of users identified in Step S106 and associate them with each other (Step S202), and then quits the association update process. For example, if the association table 204 is created as in the example shown in FIG. 5A, which represents the users A and B are not associated with each other in the association table 204, the association determiner 303 determines that the users identified in Step S106 (namely the users A and B) are not associated with each other (Step S201; No). Accordingly, the association updater 304 updates the association table 204 to associate the user A with the user B (Step S202), and then quits the association update process. For example, the association updater 304 adds a record (corresponding to ID = 100) that contains the user A in the user 1 column and the user B in the user 2 column to the association table 204 as shown in FIG. 5B.

Additionally, when the association determiner 303 determines that the users identified in Step S106 are already associated with each other (Step S201; Yes), it quits the association update process without updating the association table 204. For example, if the users A and B are identified in Step S106 and the association table 204 contains a record (corresponding to ID = 100) that associates the user A with the user B as shown in FIG. 5B, the association determiner 303 determines that the users (namely the users A and B) are already associated with each other (Step S201; Yes) and quits the association update process without updating the association table 204.

According to the present embodiment, the server 10 sends a recommendation email suggesting to a first user and a second user who have once exchanged a message that they should exchange a message. The two users can mutually make friend registration by exchanging a message in response to the recommendation email without the process where one user sends a request and the other user accepts it. Consequently, the present embodiment makes it possible to reduce a sense of resistance involved with a request for friend registration and to reflect actual personal relationships among users in a system more easily.

It should be noted that the present disclosure is not limited to the above-described embodiment and allows for various variations and applications. For example, the server 10 may measure frequencies of message exchanges among users and send the above-described recommendation email when a frequency exceeds a certain reference level.

### (Embodiment 2)

The server 10 according to Embodiment 1 sends a recommendation email suggesting exchange of a message to (information terminals 20 possessed by) the users who have once exchanged a message between them, but any technique may be used to identify the user to whom a recommendation email should be sent. The following describes Embodiment 2 in which recommendation emails are sent to the users who have exchanged a message and are physically closer to each other.

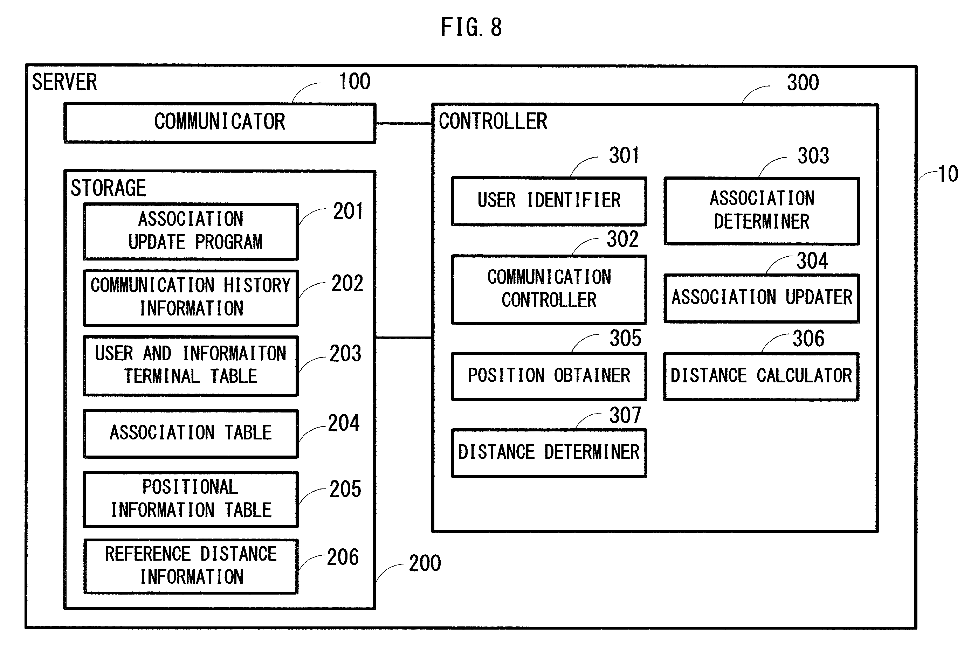

A server 10 according to Embodiment 2 includes a communicator 100, a storage 200, and a controller 300 as illustrated in FIG. 8.

The storage 200 stores an association update program 201, communication history information 202, a user and information terminal table 203, and an association table 204, as well as storing a positional information table 205 and reference distance information 206 as described below.

The positional information table 205 contains information about positions of information terminals 20.

The reference distance information 206 indicates a distance (reference distance) used as reference to be compared with a distance calculated by a distance calculator 306 described below.

The controller 300 functions as a user identifier 301, a communication controller 302, an association determiner 303, and an association updater 304 by operating in accordance with the association update program 201 (note that processes performed by these units are the same as in Embodiment 1), as well as functioning as a position obtainer 305, a distance calculator 306, and a distance determiner 307.

The position obtainer 305 obtains positional information (the current position) of the user (the information terminal 20 corresponding to the user) identified by the user identifier 301 and stores the obtained information into the positional information table 205.

The distance calculator 306 reads positional information obtained by the position obtainer 305 (for example the positional information of the information terminal 20A and positional information of the information terminal 20B) from the positional information table 205 and then calculates the distance between information terminals 20 (for example, the distance between the information terminals 20A and 20B).

The distance determiner 307 determines whether the distance calculated by the distance calculator 306 is equal to or less than a reference distance (as indicated by the reference distance information 206).

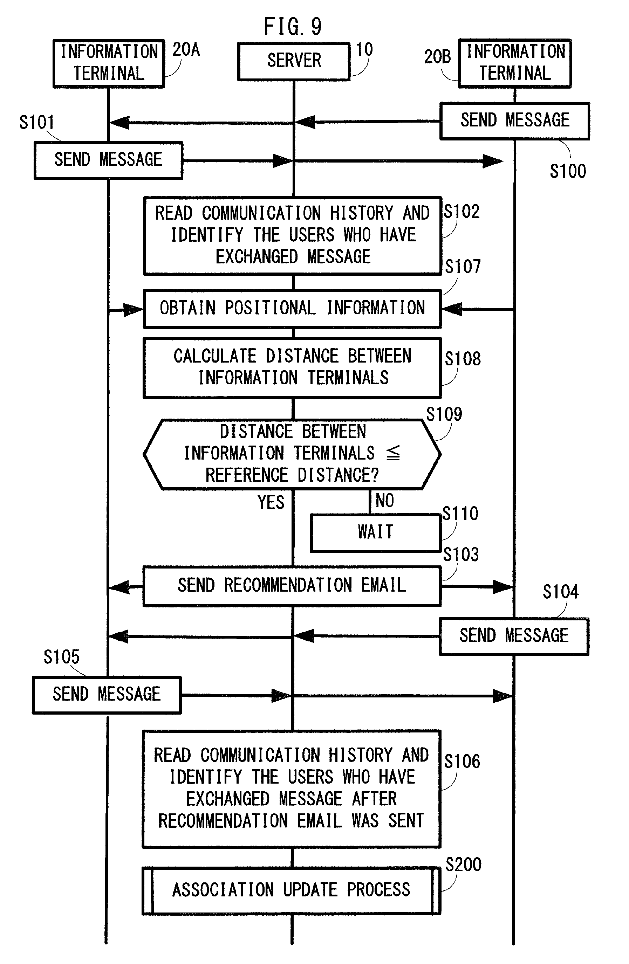

The following describes operations of the server 10 configured as above with reference to the sequence diagram in FIG. 9. For ease of understanding, the following description uses the information terminals 20A and 20B as examples, among a plurality of information terminals 20 connected to the communication network N.

Every time a communication is made via the server 10 (for example, sending and receiving a message between the information terminals 20A and 20B via the server 10, or sending an email from the server 10 to the information terminal 20A or 20B) the controller 300 records a history item of the communication into the communication history information 202.

As an example, an assumption is made here that, as illustrated in FIG. 9, the information terminal 20B (one of a plurality of information terminals 20 connected to the communication network N) sent a message to the information terminal 20A (another one of the plurality of information terminals 20 connected to the communication network N) via the server 10 (Step S100). When the message is sent, the server 10 (the controller 300 shown in FIG. 8) records into the communication history information 202 the date and time when the message was sent, the sender of the message (the information terminal 20B), and the destination of the message (the information terminal 20A).

Additionally, it is assumed that the information terminal 20A, which received the message from the information terminal 20B, has sent a message to the information terminal 20B via the server 10 (Step S101). When the message is sent, the server 10 (the controller 300 shown in FIG. 8) records into the communication history information 202 the date and time when the message was sent, the sender of the message (the information terminal 20A), and the destination of the message (the information terminal 20B).

At some preset time, the server 10 (the controller 300 shown in FIG. 2) reads the communication history information 202 where a communication history is recorded (note that it may be read not only at the preset time but also at any time), identifies the information terminals 20 (the information terminals 20A and 20B) that exchanged a message based on the communication history, and references the user and information terminal table 203 to identify the users who exchanged the message (Step S102). The above description assumes that the communication history information 202 contains the communication history shown in FIG. 3A and that the users identified in Step S102 are the user A (corresponding to the information terminal 20A) and the user B (corresponding to the information terminal 20B).

Then, the server 10 (the position obtainer 305 shown in FIG. 8) obtains the respective positional information of the users (the users A and B) identified in Step S102 (the positional information of the information terminal 20A corresponding to the user A and the positional information of the information terminal 20B corresponding to the user B) (Step S107). For example, the server 10 sends to the information terminal 20A a request for sending positional information to the server 10. Upon receipt of the request, the information terminal 20A measures the position (the current position) of the terminal 20A (for example, if the information terminal 20A is equipped with GPS [Global Positioning System] locator, the terminal 20A measures the position of the terminal 20A based on GPS signals received from GPS satellites) and sends the terminal 20A's positional information (the current position) to the server 10. Likewise, the server 10 sends to the information terminal 20B a request for sending positional information to the server 10. Upon receipt of the request, the information terminal 20B measures the position (the current position) of the terminal 20B and sends the terminal 20B's positional information (the current position) to the server 10. In this way, the server 10 obtains positional information of the information terminals 20A and 20B.

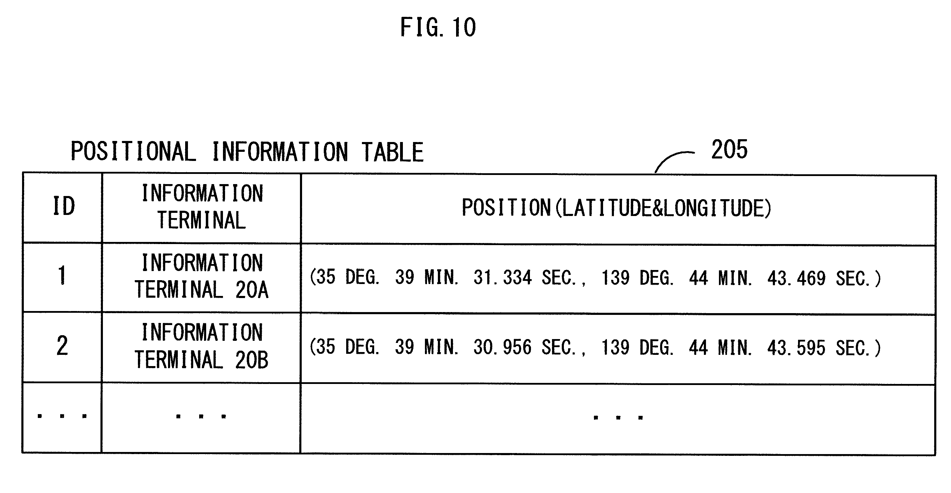

The server 10 (the position obtainer 305 shown in FIG. 8) stores the positional information of the information terminal 20A and the positional information of the information terminal 20B into the positional information table 205. The table shown in FIG. 10, which is an example of the positional information table 205, includes an ID column, an information terminal column, a position column, and the like. The ID column contains an identifier for uniquely identifying a record included in the positional information table 205. The information terminal column contains an information terminal 20 (the name of an information terminal). The position column contains positional information obtained from the information terminal 20 whose name is contained in the information terminal column. In the examples shown in FIG. 10, the record corresponding to ID = 1 shows that the information terminal 20A is currently positioned (that is, the user A is positioned) at latitude "35 degrees, 39 minutes, and 31.334 seconds", and at longitude "139 degrees, 44 minutes, and 43.469 seconds". The record corresponding to ID = 2 shows that the information terminal 20B is currently positioned (that is, the user B is positioned) at latitude "35 degrees, 39 minutes, and 30.956 seconds", and at longitude "139 degrees, 44 minutes, and 43.595 seconds".

Then, the server 10 (the distance calculator 306 shown in FIG. 8) reads positional information of the information terminals 20A and 20B from the positional information table 205 and calculates the distance between the information terminals 20A and 20B (that is, calculates the distance between the users A and B) based on the read out positional information (Step S108).

The server 10 (the distance determiner 307 shown in FIG. 8) then reads a reference distance from the reference distance information 206 and determines whether the distance between the information terminals 20A and 20B (that is, the distance between the users A and B) is equal to or less than the reference distance (Step S109).

When the distance between the information terminals 20A and 20B is determined to be equal to or less than the reference distance (Step S109; Yes), the server 10 (the communication controller 302 shown in FIG. 8) controls the communicator 100 to send a recommendation email recommending exchange of a message between the users A and B to the information terminals 20A and 20B (Step S103).

For example, if the distance between the information terminals 20A and 20B is "50 m" and the reference distance is "100 m", the server 10 determines that the distance between the information terminals 20A and 20B is equal to or less than the reference distance and sends a recommendation email to the information terminals 20A and 20B.

On the other hand, if the distance between the information terminals 20A and 20B is determined not to be equal to or less than the reference distance (Step S109; No), the server 10 (the controller 300 shown in FIG. 2) waits for another request (Step S110).

According to the present embodiment, the server 10 identifies the users A and B who have ever exchanged a message with each other and obtains positional information of the user A as well as positional information of the user B. The server 10 then calculates a distance between the users A and B based on the obtained positional information and, if the calculated distance is equal to or less than a reference distance, sends to the information terminals 20A and 20B a recommendation email recommending to exchange a message between the users A and B. As a result, the server can send a recommendation email to any two users who have ever exchanged a message and are likely to be in a close friendship.

It should be noted that the present disclosure is not limited the above-described embodiments and allows for various variations (including deletion of a component) and applications thereof.

In Embodiment 2 above, the server 10 identifies the users who have exchanged a message with each other (Step S102), and then obtains positional information of these two users (Step S107). The positional information of the users may be obtained at any time and at any frequency; for example, the server 10 may obtain the positional information cyclically during a predetermined time period after identifying the users. In this example, the server 10 may obtain positional information of the two users at 15-minute intervals during a period of 48 hours after identifying the users who have exchanged a message, and may send a recommendation email at any timing of the intervals during the period if a distance between the users is equal to or less the reference distance. This can reduce the possibility that the distance between two users fails to meet a criterion due to the fact the two users, who are usually located close to each other, happen to be remote from each other when the positional information is obtained. Alternatively, the server 10 may find the content of the exchanged message to determine when to obtain positional information of the two users based on the content. For example, if a pair of users exchange a message promising to meet together, the server can obtain positional information at the appointed time, thereby better reflecting actual personal relationships in a system.

In Embodiment 2, the communication controller 302 sends a recommendation email to information terminals 20 corresponding to the two users who have ever exchanged a message if the distance between the users is equal to or less than a reference distance, but criteria for sending recommendation emails are not limited to this. Recommendation emails may be sent to a pair of users who have been extracted according to various criteria based on the positions of the users. For example, the server may be configured to send a recommendation email to the users' information terminals 20 as far as the users have ever exchanged a message and they are located in the same administrative district.

Moreover, criteria in Embodiment 2 are not limited to positions; the communication controller 302 may send a recommendation email to a pair of users who have ever exchanged a message if the users satisfy any other condition (criterion).

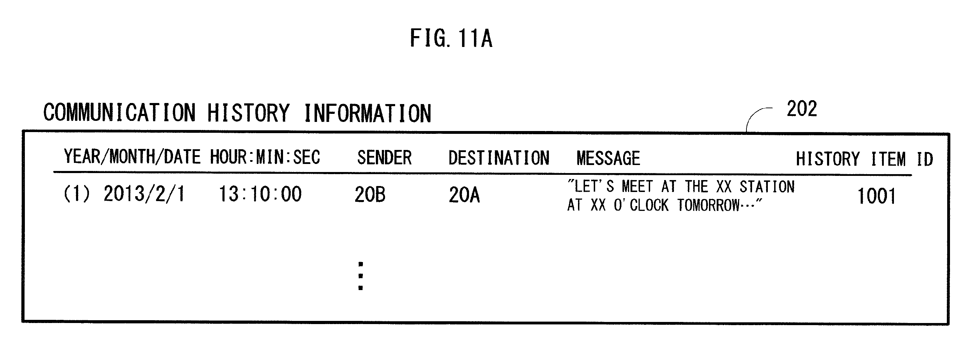

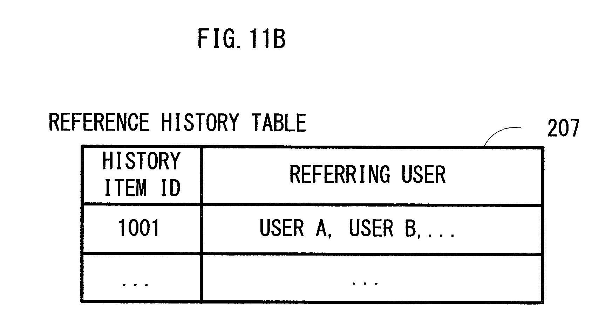

For example, the communication controller 302 may send a recommendation email to the user A (the information terminal 20A corresponding to the user A) and to the user B (the information terminal 20B corresponding to the user B) when the users A and B refer to a message that was exchanged between the users A and B and is listed in the communication history. The following example assumes that the communication history recorded in the communication history information 202 includes, in addition to information representing the date and time, the sender, and the destination of transmission, an exchanged message and a history item ID assigned to each communication history item. The example (1) shown in FIG. 11A includes an exchanged message "Let's meet at the XXX station at XXX o'clock tomorrow." and a history item ID "1001". The storage 200 (the referenced information storage) stores a reference history table 207. As shown in FIG. 11B, it is assumed that the reference history table 207 includes a history item ID column containing a history item ID (corresponding to the history item ID included in the communication history information 202) and a referring user column containing a user (user name) who referred to the message corresponding to the history item ID (the message included in the communication history information 202). In the example, the record in the first line of the reference history table 207 shows that a plurality of users including the users A and B referred to the message corresponding the history item ID "1001".

In the above example, the user identifier 301 references the communication history information 202 to identify the users A and B as the ones who have exchanged a message. The controller 300 (the third determiner) references the reference history table 207 to determine whether both of the users A and B identified by the user identifier 301 have referred to the message (Let's meet at... XXX o'clock tomorrow) exchanged between the users A and B. When the controller 300 determines that the message was referred to by the users A and B, the communication controller 302 sends a recommendation email to these users. On the other hand, if it is determined that the message was not referred to, the communication controller 302 does not send a recommendation email to either of the users A and B.

Alternatively, the communication controller 302 may send a recommendation email to the users A and B if both of the users A and B have referred to a message, which was once exchanged between them and is included in a communication history, within a predetermined period after the exchange of the message. For example, an assumption is made here that a communication history includes information that makes the user sending information, the user receiving the information, and the date and time when the sending user sent the information to the receiving user mapped to one another. In addition, it is assumed that the referenced information includes information that makes the users referring to the exchanged information and the date and time when the users referred to the exchanged information mapped to each other. In this case, the controller 300 (the period calculator) extracts from the communication history the date and time when the user B, after receiving the information that had been first sent by the user A to the user B, first sent information to the user A, extracts from the referenced information the date and time when the users A and B referred to the exchanged information, and calculates an elapsed period since the date and time when the information was sent until the date and time when the information was referred to. Then, the controller 300 (the third determiner) determines whether the calculated period is shorter than a predetermined period. If the calculated period is determined to be shorter than the predetermined period, the communication controller 302 sends a recommendation email to the users A and B. On the other hand, if the calculated period is determined not to be shorter than the predetermined period, the communication controller 302 does not send a recommendation email to either of the users A and B.

In Embodiment 1, a recommendation email is sent to the users who have ever exchanged a message, but the recommendation email may not be sent to these users if they are already associated with each other. For example, an assumption is made here that the user identifier 301 has identified the users A and B in Step S102 (as the users who exchanged a message beforehand). Then, the association determiner 303 references the association table 204 to determine whether the users A and B are already associated with each other. If it is determined that the users A and B are already associated with each other, the communication controller 302 does not send a recommendation email to either of the user A (the information terminal 20A corresponding to the user A) and the user B (the information terminal 20B corresponding to the user B). On the other hand, if it is determined that the users A and B are not associated with each other, the communication controller 302 associates the user A with the user B.

In the individual embodiments described above, the communication controller 302 associates users with each other when the users exchange a message in response to a recommendation email sent to the users, but criteria for associating users with each other are not limited to this. For example, an assumption is made here that the users A and B received a recommendation email. In this case, the user A may be associated with the user B if the user A has sent, independently of the recommendation email, an email containing greetings to the user B and then the user B has sent an email containing greetings to the user A.

In the individual embodiments described above, the communication controller 302 associates users who are in a relationship satisfying a certain criterion (having had certain interaction) with each other without the users' approvals, but techniques for reflecting an actual personal relationship between users in a system are not limited to this. For example, an association between users estranged from each other (for example, users having no message exchanged for a certain period or more) may be canceled without approvals of these users. As an example, it is assumed here that the users A and B are associated with each other and have not exchanged any message for a certain period or more (that is, they are estranged from each other). In this case, the user identifier 301 references the association table 204 to identify the users A and B who are associated with each other in the table. In addition, the user identifier 301 references the communication history information 202 to find that the users A and B have not exchanged any message with each other for a certain period or more. Then, the association updater 304 (the association canceler) cancels the association between the users A and B (without their approvals) if the users A and B meet the condition for canceling the association (the condition representing that no message is exchanged between users for a certain period or more).

If an information terminal 20 has the capability to display an associated user on the screen in response to operation by the user of the terminal 20, how the associated user is displayed on the information terminal 20 may be changed depending on the period that has elapsed since the date and time when information was last exchanged between the users.

For example, the character size used for displaying the user on the screen of the information terminal 20 may be decreased depending on the elapsed period. As an example, it is assumed that the association table 204 contains an association between the users A and B and that the communication history information 202 includes information that makes the user sending information, the user receiving information, and the date and time when the sending user sent information to the receiving user mapped to one another. It is also assumed that the storage 200 stores the period that has elapsed since the last exchange of information between the users and the character size determined depending on the elapsed time, where the elapsed time and the character size are mapped to each other (note that the character size is characterized in that it is smaller as the elapsed period is longer). In this case, the user identifier 301 references the association table 204 to identify the users A and B who are associated with each other. Then, the controller 300 extracts from the communication history information 202 the date and time when the user B last sent information to the user A, after receiving information that had been last sent by the user A to user B, and then calculates a period that has elapsed since the date and time when the information was sent. In addition, the controller 300 extracts from the storage 200 the character size mapped to the elapsed period. The communication controller 302 sends the association between the users A and B along with the extracted character size to the information terminal 20A. Upon receipt of such information, the user B is displayed in the informed character size on the screen of the information terminal 20A.

Alternatively, instead of reducing the character size for displaying a user depending on the period that has elapsed since the last exchange of information between users, the user (the characters representing the user) may be displayed in lighter color depending on the elapsed period. In this case, the storage 200, instead of storing the elapsed period and its mapped character size, stores the elapsed period and its mapped character color (note that the character color is characterized in that it is lighter as the elapsed period is longer). The controller 300 extracts from the storage 200 the character color mapped to the elapsed period, and then the communication controller 302 sends the association between the users A and B along with the extracted character color to the information terminal 20A. The term "lighter color" as used herein broadly includes decreasing color brightness, decreasing color saturation, and the like.

### (Embodiment 3)

The server 10 according to the individual embodiments above can be configured as described below.

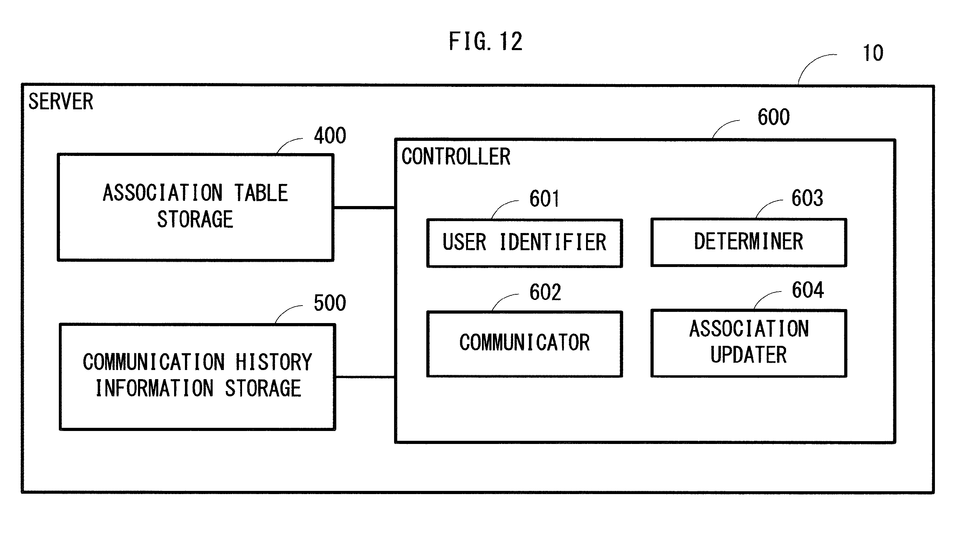

As illustrated in FIG. 12, the server 10 includes an association table storage 400, a communication history information storage 500, and a controller 600.

The association table storage 400 includes a storage device, such as a flash memory or a hard disk, to store programs (for example, the association update program 201 shown in FIGS. 2 and 8), data (for example, the association table 204 shown in FIGS. 5A and 5B), and the like.

The communication history information storage 500 includes a storage device, such as a flash memory or a hard disk, to store data (for example, the communication history information 202 shown in FIGS. 3A and 3B).

The controller 600 includes a CPU, a ROM storing a basic operating program, a RAM providing a work area, and the like to perform various processes according to programs stored in the association table storage 400 or the like. For example, the controller 600 performs an association update process (the association update process described in each embodiment above) according to the association update program 201. In addition, the controller 600 functions as a user identifier 601, a communicator 602, a determiner 603, and an association updater 604 by operating in accordance with the association update program 201.

The user identifier 601 identifies a first user (user A) and a second user (user B) who satisfy a predetermined criterion, based on a communication history stored in the communication history information storage 500.

The communicator 602 sends to at least either one of an information terminal 20A corresponding to the first user identified by the user identifier 601 and an information terminal 20B corresponding to the second user identified by the user identifier 601 a message that presents a process to be performed for registering the first and second users in the association table 204.

After the communicator 602 sends the message, the determiner 603 determines whether the first and second users have performed the process presented in the message.

When the determiner 603 determines that the presented process has been performed, the association updater 604 updates the association table 204 to associate the first user with the second user.

The above configuration can provide the same effects as provided by the server 10 described in Embodiments 1 and 2.

In the individual embodiments above, a system may be configured so that the above-described processes are performed by installing and executing the programs that are stored and distributed in a non-transitory computer-readable recording medium, such as a flexible disk, CD-ROM (compact disc read-only memory), DVD (digital versatile disc), or MO (magneto-optical disc).

Alternatively, the programs may be stored in a disk device or the like included in a predetermined server device that is located on a communication network such as the Internet, and, for example, the programs may be superimposed on a carrier wave to be downloaded or the like.

If the above-described functions are implemented partly on an operating system (OS) or implemented through collaboration between an OS and applications, programs except those handled by the OS may be stored and distributed in a medium, or may be downloaded or the like.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

The whole or part of the above embodiments can be described as, but is not limited to, the following supplementary notes.

### (Supplementary Note 1)

An information processing device comprising:
an association table storage that stores an association table associating users with each other;
a communication history information storage that stores a communication history with a terminal that is connected via a communication network;
a user identifier that identifies a first user and a second user who satisfy a predetermined criterion, based on the communication history stored in the communication history information storage;
a communicator that sends to at least either one of a terminal corresponding to the first user identified by the user identifier and a terminal corresponding to the second user identified by the user identifier a message that presents a process to be performed for registering the first and second users in the association table;
a determiner that determines, after the communicator sends the message, whether the first and second users have performed the process presented in the message; and
an association updater that updates, when the determiner determines that the process has been performed, the association table to associate the first user with the second user.

### (Supplementary Note 2)

The information processing device according to Supplementary Note 1,
wherein the communicator sends to at least either one of a terminal corresponding to the first user identified by the user identifier and a terminal corresponding to the second user identified by the user identifier a message recommending the first and second users to exchange information with each other,
and wherein the determiner determines, based on the communication history, whether the first and second users have exchanged information with each other after the message was sent,
and wherein the association updater updates, when the determiner determines that information has been exchanged, the association table to associate the first user with the second user.

### (Supplementary Note 3)

The information processing device according to Supplementary Note 1 or 2 comprising:
a positional information obtainer that obtains first positional information indicating a position of the first user and second positional information indicating a position of the second user; and
a second determiner that determines, based on the first positional information and the second positional information obtained by the positional information obtainer, whether the position of the first user and the position of the second user satisfy a predetermined condition,
wherein, if the second determiner determines that the condition is not satisfied, the communicator does not send the message to either of a terminal corresponding to the first user and a terminal corresponding to the second user.

### (Supplementary Note 4)

The information processing device according to Supplementary Note 3 comprising:
a distance calculator that calculates, based on the first positional information and the second positional information obtained by the positional information obtainer, a distance between the first user and the second user,
wherein the second determiner determines whether the distance calculated by the distance calculator is equal to or less than a reference distance,
and wherein, if the second determiner determines that the distance is not equal to or less than the reference distance, the communicator does not send the message to either of a terminal corresponding to the first user and a terminal corresponding to the second user.

### (Supplementary Note 5)

The information processing device according to Supplementary Note 1 or 2,
wherein the communication history includes information that was exchanged between the first user and the second user,
the information processing device comprising:
a referenced information storage that stores referenced information for identifying a user who referred to the exchanged information; and
a third determiner that determines, based on the referenced information stored in the referenced information storage, whether both of the first user and the second user have referred to the exchanged information,
wherein, if the third determiner determines that the exchanged information has not been referred to, the communicator does not send the message to either of a terminal corresponding to the first user and a terminal corresponding to the second user.

### (Supplementary Note 6)

The information processing device according to Supplementary Note 5,
wherein the communication history includes information that makes a user sending information, a user receiving information, and a date and time when the user sending information sent information to the user receiving information mapped to one another,
and wherein the referenced information includes information that makes a user who referred to the exchanged information and a date and time when the user referred to the exchanged information mapped to each other,
the information processing device comprising:
a period calculator that extracts from the communication history a date and time when the second user first sent information to the first user, after receiving information that had been first sent by the first user to the second user, and further extracts from the referenced information a date and time when both of the first user and the second user referred to the exchanged information, and then calculates an elapsed period since the date and time when the information was sent until the date and time when the information was referred to,
wherein the third determiner determines whether the period calculated by the period calculator is shorter than a predetermined period,
and wherein, if the third determiner determines that the period is not shorter than the predetermined period, the communicator does not send the message to either of a terminal corresponding to the first user and a terminal corresponding to the second user.

### (Supplementary Note 7)

The information processing device according to any one of Supplementary Notes 1 to 6 comprising:
an association determiner that determines whether the first and second users identified by the user identifier are already associated with each other in the association table stored in the association table storage,
wherein, if the association determiner determines that the first and second users are associated with each other, the communicator does not send the message to either of a terminal corresponding to the first user and a terminal corresponding to the second user.

(Supplementary Note 8)

A method for processing information comprising:
an identification step of identifying a first user and a second user who satisfy a predetermined criterion, based on a communication history between an information processing device and a terminal that are connected to each other via a communication network;
a sending step of sending to at least either one of a terminal corresponding to the first user identified in the identification step and a terminal corresponding to the second user identified in the identification step a message that presents a process to be performed for associating the first user with the second user;
a determination step of determining, after the message is sent in the sending step, whether the first and second users have performed the process presented in the message; and
an association step of associating the first user with the second user if the presented process is determined to have been performed in the determination step.

(Supplementary Note 9)

A non-transitory recording medium that records a program causing a computer to execute:
an identification step of identifying a first user and a second user who satisfy a predetermined criterion, based on a communication history with a terminal that is connected via a communication network;
a sending step of sending to at least either one of a terminal corresponding to the first user identified in the identification step and a terminal corresponding to the second user identified in the identification step a message that presents a process to be performed for associating the first user with the second user;
a determination step of determining, after the message is sent in the sending step, whether the first and second users have performed the process presented in the message; and
an association step of associating the first user with the second user if the presented process is determined to have been performed in the determination step.

The present disclosure is based on Japanese Patent Application No. 2013-39613, which was filed on February 28, 2013. The description, claims, and drawings of Japanese Patent Application No. 2013-39613 are incorporated herein by reference in their entirety.

### Reference Signs List

- 10: Server
- 20: Information terminal
- 20A: Information terminal
- 20B: Information terminal
- 100: Communicator
- 200: Storage
- 201: Association update program
- 202: Communication history information
- 203: User and information terminal table
- 204: Association table
- 205: Positional information table
- 206: Reference distance information
- 207: Reference history table
- 300: Controller
- 301: User identifier
- 302: Communication controller
- 303: Association determiner
- 304: Association updater
- 305: Position obtainer
- 306: Distance calculator
- 307: Distance determiner
- 400: Association table storage
- 500: Communication history information storage
- 600: Controller
- 601: User identifier
- 602: Communicator
- 603: Determiner
- 604: Association updater
- N: Communication network

## Claims

1. An information processing device comprising:
an association table storage that stores an association table associating users with each other;
a communication history information storage that stores a communication history with a terminal that is connected via a communication network;
a user identifier that identifies a first user and a second user who satisfy a predetermined criterion, based on the communication history stored in the communication history information storage;
a communicator that sends to at least either one of a terminal corresponding to the first user identified by the user identifier and a terminal corresponding to the second user identified by the user identifier a message that presents a process to be performed for registering the first and second users in the association table;
a determiner that determines, after the communicator sends the message, whether the first and second users have performed the process presented in the message; and
an association updater that updates, when the determiner determines that the process has been performed, the association table to associate the first user with the second user.

2. The information processing device according to Claim 1,
wherein the communicator sends to at least either one of a terminal corresponding to the first user identified by the user identifier and a terminal corresponding to the second user identified by the user identifier a message recommending the first and second users to exchange information with each other,
and wherein the determiner determines, based on the communication history, whether the first and second users have exchanged information with each other after the message was sent,
and wherein the association updater updates, when the determiner determines that information has been exchanged, the association table to associate the first user with the second user.

3. The information processing device according to Claim 1 or 2 comprising:
a positional information obtainer that obtains first positional information indicating a position of the first user and second positional information indicating a position of the second user; and
a second determiner that determines, based on the first positional information and the second positional information obtained by the positional information obtainer, whether the position of the first user and the position of the second user satisfy a predetermined condition,
wherein, if the second determiner determines that the condition is not satisfied, the communicator does not send the message to either of a terminal corresponding to the first user and a terminal corresponding to the second user.

4. The information processing device according to Claim 3 comprising:
a distance calculator that calculates, based on the first positional information and the second positional information obtained by the positional information obtainer, a distance between the first user and the second user,
wherein the second determiner determines whether the distance calculated by the distance calculator is equal to or less than a reference distance,
and wherein, if the second determiner determines that the distance is not equal to or less than the reference distance, the communicator does not send the message to either of a terminal corresponding to the first user and a terminal corresponding to the second user.

5. The information processing device according to Claim 1 or 2,
wherein the communication history includes information that was exchanged between the first user and the second user,
the information processing device comprising:
a referenced information storage that stores referenced information for identifying a user who referred to the exchanged information; and
a third determiner that determines, based on the referenced information stored in the referenced information storage, whether both of the first user and the second user have referred to the exchanged information,
wherein, if the third determiner determines that the exchanged information has not been referred to, the communicator does not send the message to either of a terminal corresponding to the first user and a terminal corresponding to the second user.

6. The information processing device according to Claim 5,
wherein the communication history includes information that makes a user sending information, a user receiving information, and a date and time when the user sending information sent information to the user receiving information mapped to one another,
and wherein the referenced information includes information that makes a user who referred to the exchanged information and a date and time when the user referred to the exchanged information mapped to each other,
the information processing device comprising:
a period calculator that extracts from the communication history a date and time when the second user first sent information to the first user, after receiving information that had been first sent by the first user to the second user, and further extracts from the referenced information a date and time when both of the first user and the second user referred to the exchanged information, and then calculates an elapsed period since the date and time when the information was sent until the date and time when the information was referred to,
wherein the third determiner determines whether the period calculated by the period calculator is shorter than a predetermined period,
and wherein, if the third determiner determines that the period is not shorter than the predetermined period, the communicator does not send the message to either of a terminal corresponding to the first user and a terminal corresponding to the second user.

7. The information processing device according to any one of Claims 1 to 6 comprising:
an association determiner that determines whether the first and second users identified by the user identifier are already associated with each other in the association table stored in the association table storage,
wherein, if the association determiner determines that the first and second users are associated with each other, the communicator does not send the message to either of a terminal corresponding to the first user and a terminal corresponding to the second user.

8. A method for processing information comprising:
an identification step of identifying a first user and a second user who satisfy a predetermined criterion, based on a communication history between an information processing device and a terminal that are connected to each other via a communication network;
a sending step of sending to at least either one of a terminal corresponding to the first user identified in the identification step and a terminal corresponding to the second user identified in the identification step a message that presents a process to be performed for associating the first user with the second user;
a determination step of determining, after the message is sent in the sending step, whether the first and second users have performed the process presented in the message; and
an association step of associating the first user with the second user if the presented process is determined to have been performed in the determination step.

9. A non-transitory recording medium that records a program causing a computer to execute:
an identification step of identifying a first user and a second user who satisfy a predetermined criterion, based on a communication history with a terminal that is connected via a communication network;
a sending step of sending to at least either one of a terminal corresponding to the first user identified in the identification step and a terminal corresponding to the second user identified in the identification step a message that presents a process to be performed for associating the first user with the second user;
a determination step of determining, after the message is sent in the sending step, whether the first and second users have performed the process presented in the message; and
an association step of associating the first user with the second user if the presented process is determined to have been performed in the determination step.
